# EUROPEAN PATENT APPLICATION

(11) **EP 1 130 543 A2**
(43) Date of publication of application: **05.09.2001**
(21) Application number: 01301210.9
(22) Date of filing: 12.02.2001
(51) Int. Cl.: G06N 5/02

(54) **Knowledge-based comparative information dissemination system**

(30) Priority: 11.02.2000 US 502565
(71) Applicant: Authoria Inc., Waltham, Massachusetts 02451 (US)
(72) Inventor: Farlow, Timothy S., Needham, Massachusetts 02449 (US)
(74) Representative: Deans, Michael John Percy

(57) **Abstract**

A comparison table generation and display technique for use with a knowledge-based comparative information dissemination system is provided. The technique enables system users to generate a comparison table containing information related to the knowledge domain to which the system is directed in such a way as to most easily compare the differences between various aspects of the domain. In addition, the technique enables users to generate a comparison table containing information related to the same aspects of the domain over different time periods.

## Description

The present invention relates to a knowledge-based, comparative information dissemination system.

The system described in detail below has an architecture that separates the presentation of information from its organization in the system to enable a user to dynamically alter both the information retrieved and the format in which the retrieved information is displayed.

It is common for companies to offer more than one benefit plan to their employees. E.g., a company might offer different medical plans having different features and costs and different retirement savings plans having different payroll deduction options. Although determining which plan best suits an individual employee's needs can be a very complicated decision, new employees are typically asked to enroll in a medical plan and a retirement plan on the day that they begin their employment with the company.

Further, although companies typically provide written materials describing the various plans, the benefits offered under the plans, and their respective costs, these are usually very complex legal documents that are drafted with an eye toward satisfying the vendor's full disclosure requirements, not toward educating the customer. Unfortunately, most companies merely distribute these printed materials provided by the vendors and make no provisions for an employee to make a simple comparative analysis of the available options. Thus, even if the employee is permitted a few days before being required to make an enrollment decision, in many cases the decision is still made without the employee understanding the differences between the offered plans or the impact that selecting one plan over another will have, given the employee's particular needs and circumstances. Furthermore, if the new employee later decides that the selected plans and/or benefits do not best suit his needs, any subsequent changes may only be made during the annual enrollment period open to all employees. This could require an employee to wait up to a year to correct a poor decision made either in haste or with insufficient information.

Regrettably, specific comparative information often is difficult to compile, even for trained benefits administrators, and requires significant extra work on the part of the domain experts to compile. In addition, even compiled information usually is difficult to understand for the employee who is generally unfamiliar with the employee benefits knowledge domain. Moreover, if such collected comparative information is maintained by the domain experts, it must be updated continuously as costs and features of the various plans change.

An increasingly useful way for companies to collect, maintain, and disseminate such complex information is to use a knowledge-based system. Knowledge-based systems, also known as "expert" systems, are typically application programs that make decisions or solve problems in a particular subject area, referred to as a "knowledge domain," by using knowledge and analytical tools defined by experts in the field. By their very nature, expert systems are knowledge-intensive due to the goal of modeling human expertise in a domain. Such systems usually comprise two components: a knowledge base containing the information necessary to answer questions relevant to the domain and an inference engine to formulate answers to these questions, also known as "queries," based on the information contained in the knowledge base. Also, a user interface typically is provided to receive the queries from either a user or another application program, to submit these queries to the inference engine, and then to provide responses back to the user or other application program. Users of such an expert system may include Human Resource (HR) personnel and individual employees themselves.

Knowledge-based systems have been used in such diverse knowledge domains as engineering, the sciences, medicine, and business. Similar to numerical computer systems, they model situations and solve problems. However, and most importantly, knowledge-based systems also provide representation and reasoning capabilities that are not possible with most numerical methods. One specific example of these additional capabilities concerns the modeling of the knowledge possessed by human resource professionals in institutions such as government agencies or commercial companies.

There are currently many systems used by HR departments to answer employee and managerial questions about employee benefit plans and HR policies, procedures, and practices. These questions address issues such as how to use medical plans, take leaves of absence, and file harassment complaints; as well as other issues such as paycheck withholding amounts, for example.

The information sources used to answer these questions in the typical organization usually reside in various formal and informal repositories. Some sources are static documents, both paper and electronic. These documents, which may or may not have been generated by the HR department, are designed to answer questions posed by employees. Other information sources include dynamic databases, such as the human resource management systems (HRMSs) that contain accounting information for each employee. Finally, some information resides only in the heads of the experienced HR professionals in the organization. These various and unconnected systems are the basis of most companies's HR information dissemination processes today, but there are problems with the underlying model for information dissemination.

First, pre-prepared, static documents are costly to produce. These document types include manually maintained policy manuals, summary plan descriptions, and web sites. Second, these document types tend quickly to become outdated, especially during major system or corporate reorganizations. Also, these resources often are able only to give general answers because more-detailed answers may vary depending on a particular employee's situation, such as employee group, physical location, age, and length of employment.

In contrast, HRMSs, which are sometimes part of even larger enterprise resource planning systems (ERPs), contain vast quantities of accurate, constantly-updated data. These dynamic systems, however, usually do not contain information on HR policies or on how to submit forms, for example. Thus, HRMSs tend to be able to answer questions seeking information from one data source (e.g., what is the net amount on my monthly paycheck), but not questions seeking information from a variety of data sources (*e*.*g*., I'm having a baby, what does the company do for me and what must I do to use these benefits).

Other systems, such as electronic collections of answers to questions previously asked by other employees, are easy to search, but require significant resources to prepare and pose the same problems presented by static, prepared documents. These electronic question collection systems are likely to yield incorrect answers as a result of changes in company policies or system organization that would render previously correct answers incorrect. Not only is it tedious and difficult to identify and correct all of the affected answers following a change in company policies or system organization, it is even harder to verify that the changed answers are correct and complete. This is because the answers to such questions do not necessarily reflect the various data that were used to formulate the answers. It quickly becomes apparent that such systems do not adequately address the deficiencies of other systems or serve as a useful information resource.

Finally, although HR professionals themselves can be used to answer questions, such a resource is both expensive and inefficient. Using HR professionals to constantly answer repetitive questions, instead of performing other, more important aspects of their jobs, is not the best application of their skills and may result in the loss of talented HR professionals from an organization. In addition, finding the appropriate knowledgeable person to answer a question can be a frustrating and slow process for an employee. Furthermore, such resources may not be accessed by other computer applications, the way an electronic system may be. Thus, relying on HR personnel to provide employee information is not a productive option for any but the smallest of organizations.

Consequently, knowledge modeling and delivery systems have evolved that combine pre-configured, parameterized models of human resource knowledge with organization and employee data. Such expert systems have successfully delivered personalized answers to employee and manager questions about benefit plans, payroll, HR policies, procedures, and practices using expert system inferencing techniques.

However, in the advancement of knowledge systems generally, most of the effort has been directed to improving knowledge modeling and inferencing techniques in order to improve system reliability and the value of the information such systems provide to the user. Unfortunately, because of the limited commercial viability of these knowledge modeling and inferencing techniques thus far, insufficient effort has been expended to improve the delivery of information generated by the knowledge system to the user. However, if such knowledge-based systems are ever to be more broadly deployed, issues such as information presentation move to the forefront.

In the past, knowledge-based systems have generally employed one or two means to present the information drawn by the inferencing engine from the knowledge base. Most commonly, presentation of the information is dependent on how the knowledge in the knowledge base is organized. Domain experts inevitably mentally organize their knowledge differently from how various potential users might like to retrieve it. Thus, the domain experts often design and build a knowledge model of a domain that matches their mental organization of the domain, while different users of the model want to see the information contained in the model using alternative organizations. The typical solution―providing general and technical levels of responses―does not adequately meet a particular individual's specific information needs in most situations.

Recently, however, efforts have been focused on separating how the information is displayed from how it is stored in the knowledge base in order to present the same information in a variety of ways. However, problems continue to arise in the manner in which information is presented to the user due to the fact that a given user's needs may vary from the form of presentation based on the nature of the information required.

With reference to the specific example of expert systems that provide information on various plans and the benefits offered by each, it is not uncommon for an HR functional expert to create a presentation, such as a Web site or a manual, that describes each benefit plan. While the information presented seems to be complete and correct to the HR functional expert, when the presentation is referenced by an employee attempting to make a decision regarding in which plan to enroll, it is often very difficult for the user to coordinate and to digest the information. The information may be perceived by the employee as being overly technical and the key features, which the employee requires, may appear to be buried beneath other information that is irrelevant to the employee and/or fragmented into more than one location. Thus, not only is the employee frustrated by the significant effort required to obtain the correct information, the employee can never determine with certainty that all of the relevant information has been retrieved.

Moreover, other problems arise as a result of differences in the experience levels of the various users that such a system must accommodate. Some users know so little about the subject area that they fail to comprehend a given presentation, whereas other users, who may have had a great deal of experience in the knowledge domain, sometimes experience frustration in finding the "nuts and bolts" facts and details that they require.

Considering the example of an expert system that models the benefits offered by a medical plan, the same manner of presentation cannot be used for an employee, a doctor's office, and a medical plan designer because their respective needs are so disparate. Yet, if multiple presentations are built for all possible users, it is burdensome to keep them all current when changes to the knowledge base occur. Also, when an employee has a life event such as marriage or childbirth, many pieces of information from many plans and policies need to be compiled in order for the employee to determine which plan best suits the new needs and whether an enrollment change is warranted. Consider again the specific example of a company that offers more than one medical benefit plan to its employees. The different medical plans will invariably have different features, such as specific physician participation, referral requirements, services covered, and costs, such as deductible, co-pay, and prescription amounts.

The ideal comparative information distribution system would enable a new employee starting with the company to make an informed enrollment decision on the date of hire or shortly thereafter. The ideal plan would also enable enrolled employees to determine once a year during an open enrollment period if the plan in which they are currently enrolled will continue to best suit their needs in the coming year or whether they should change their enrollment. In addition, the ideal plan would enable an employee to determine which information is most necessary to make the decision. Finally, the ideal system would provide these features to users while enabling plan administrators to organise the information resources in ways that are most comprehensible to them and are easiest to maintain.

In accordance with a first aspect of the present invention, we provide a knowledge-based comparative information dissemination system, characterised in comprising:
at least one knowledge model constructed using at least one knowledge block;
at least two instantiations of said at least one knowledge model;
compiler means capable of accessing the at least one knowledge model and the at least two instantiations of said at least one knowledge model to acquire information necessary to answer a query from a system user with a defined context, said query being related to said at least two instantiations and said compiler means being further capable of combining the information so that it may be displayed to said system user; and
display means capable of presenting the combined information to said system user in a format designed to facilitate comparative analysis by said system user.

In a second and alternative aspect of this invention, we provide a knowledge-based comparative information dissemination system designed to provide, to a user having a defined context, specific information based on the user's defined context, the system being characterised in comprising:
at least one knowledge model constructed using at least one knowledge block that contains at least one reference to at least one variable;
at least one value assigned to the at least one variable;
at least one variable assignment attribute sufficient to determine the appropriate value for said at least one variable;
at least one presentation template organized in a format designed to best convey information to systems users operating in different contexts, in which different presentations are capable of incorporating the same knowledge blocks; and
compiler means that delivers presentations to a system user by combining a presentation template with content supplied by the knowledge model and variable attributes from the information repository.

According to a third aspect of the invention, there is provided a method of providing information, the method comprising the steps of:
accessing a presentation template that references at least one knowledge block;
incorporating information into the presentation template by means of a compiler based on the contents of the at least one knowledge block referenced by the presentation template; and
displaying a presentation to a user comprising the presentation template and the incorporated information in a format designed to facilitate comparative analysis.

There is provided, in a fourth aspect of the invention, a method of answering a query about an information system user, the method comprising the steps of:
a) accessing an information system that comprises:
   at least one knowledge model constructed using at least one knowledge block;
   at least two instantiations of said at least one knowledge model;
   compiler means capable of accessing the at least one knowledge model and the at least two instantiations of said at least one knowledge model to acquire information necessary to answer a query from a system user with a defined context, said query being related to said at least two instantiations and said compiler means being further capable of combining the information with a presentation page so that it may be displayed to said system user; and
   display means capable of presenting the combined information to said system user in a format designed to facilitate comparative analysis by said system user;
b) identifying said system user,
c) identifying the presentation page appropriate to answer the query;
d) determining the relevant at least two instantiations of said at least one knowledge model;
e) selecting the relevant at least two instantiations in a presentation template;
f) inserting relevant employee information into the at least one knowledge block by reference to an information repository to derive information enabling the query to be answered; and
g) displaying the derived information in a comparative table.

As will be seen from the detailed description below, the present invention enables us to provide embodiments of knowledge-based system that overcome the deficiencies of previously available information systems.

We describe below examples of a knowledge-based system having an architecture that separates the presentation of information from its organization in the system in order to provide multiple types of presentations of the same information. In the described embodiments changes to the knowledge base are automatically reflected in the plan presentations. The system enables a user to determine the format in which the pertinent information is displayed. Information may be presented in a format best to show the differences between related classes of information, e.g., the costs and benefits of different medical plans. The described systems provide a means of generating and displaying comparative information derived from related classes of information, e.g., the costs and benefits of different medical plans. They also provide a means of generating and displaying comparative information derived from the same class of information, e.g., the costs and benefits of the same medieal plan over different time periods, such as the current year and the following year.

We describe below a comparison table generation and display technique for use with a knowledge-based comparative information dissemination system. The system uses a knowledge model repository, which comprises multiple instantiations of at least one knowledge domain model. For example, in one anticipated implementation, the knowledge domain model is for medical benefit plans offered by employers. The different instantiations correspond to different plans offered by that employer. Moreover, different versions of each instantiation can be used to compare benefits and pricing for different time frames. The table generation and display technique of the present invention enables users to generate a comparison table containing information related to various features, benefits, and costs of different plans in such a way as to most easily compare the plans when making an enrollment decision. In addition, the table generation and display technique described herein enables users to generate a comparison table containing information related to the various features, benefits, and costs of the same plan over different time periods in such a way as to determine whether that plan will continue to meet their needs in the future.

The table generation and display technique is made possible by means of a compiler, such as a knowledge base engine, that is used to access the knowledge model repository and aequire information from the multiple instantiations based on the queries and/or parameters established by a user. A display process then combines the acquired information from the multiple instantiations in a tabular format to enable comparative analysis of the information by the user.

In specific embodiments, the knowledge model repository comprises at least one human resource knowledge model. For example, the different instantiations of the knowledge model could comprise different benefit plans, such as medical and retirement benefit plans, or information related to the same plan, but over different time periods, *e*.*g*., the current year and the following year. In one implementation, information is contained in knowledge blocks that compose hierarchically-organized knowledge models. Such organization can further comprise major and minor categories of the knowledge blocks.

In one embodiment, the display process presents the acquired information from the multiple instantiations in a table. For example, this table can have a first, horizontal, axis that has headings for the different knowledge model instantiations, such as various medical plans. A second, vertical, axis of the table may provide headings for different knowledge blocks covered by the selected knowledge model instantiations. For example, the vertical axis can present information such as monthly costs, doctors's participation in the plan, prescription coverage, and claim processes for each of the different medical plans presented on the horizontal axis.

Thus, a user can quickly determine the various attributes of certain classes of information, such as specific physician participation, deductible amounts for non-participating physicians, and copay amounts for a selected plan by reading down a column. Similarly, using the same table presentation, a user may quickly compare the differences between plans for the same class of information, such as copay amounts, by reading across a row.

Preferably, the table may be dynamically updated based on a user's preferences. For example, pull-down menus may be used to select among the different instantiations and selecting a new instantiation would automatically update the cells related to that new instantiation.

The above and other features, including various novel details of construction, combinations of functions, and other advantages, will now be more particularly described with reference to the accompanying drawings.

In the drawings, like reference characters refer to the same components throughout the different views. The drawings do not necessarily present every component of the system, emphasis instead being placed upon illustrating the principles of the invention. Of the drawings:
Fig. 1 shows a block diagram showing the organization of and embodiment of a knowledge-based information system according to the present invention;
Fig. 2 is a schematic representation of a web page or HTML presentation showing the organization of a dynamically generated comparison table generated by a user of one embodiment of a knowledge-based information system according to the present invention;
Fig. 3 illustrates a portion of a knowledge model from which the comparison table draws information;
Fig. 4 shows a portion of the information repository that holds the variable assignments for each of the various instantiations of the knowledge model of Fig. 3;
Fig. 5A shows a partial schematic of the interactivities of the knowledge model repository, instance repository, and runtime environment of one embodiment of knowledge-based information system according to the present invention; and
Fig. 5B shows a partial exemplary schematic of the interactivities of the knowledge model repository, instance repository, and runtime environment of one embodiment of knowledge-based information system according to the present invention implemented in the employee benefit context.

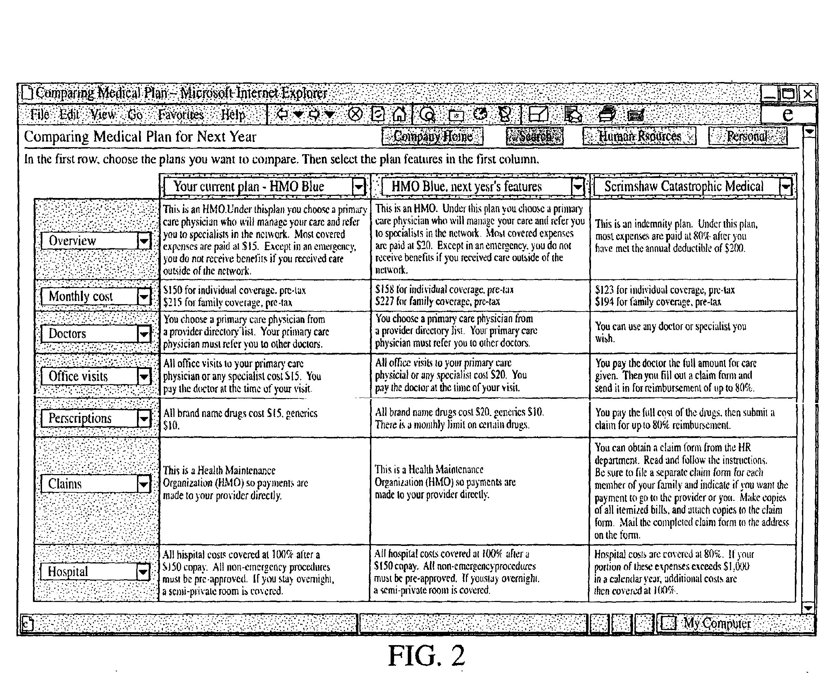

Turning now to the drawings, Fig. 2 shows a web page or HTML presentation showing the organization of a dynamically generated comparison table that has been constructed according to the principles of the present invention. While the following discussion is specific to a system that provides human resource-related information, such as medical plan, dental plan, and optional insurance plan benefits, as is common with many expert systems, the principles of the present invention have wider applicability to such diverse fields as financial systems, enterprise management systems, supply-chain systems, insurance systems, corporate sales, manufacturing processes, and technical systems, to list a few examples.

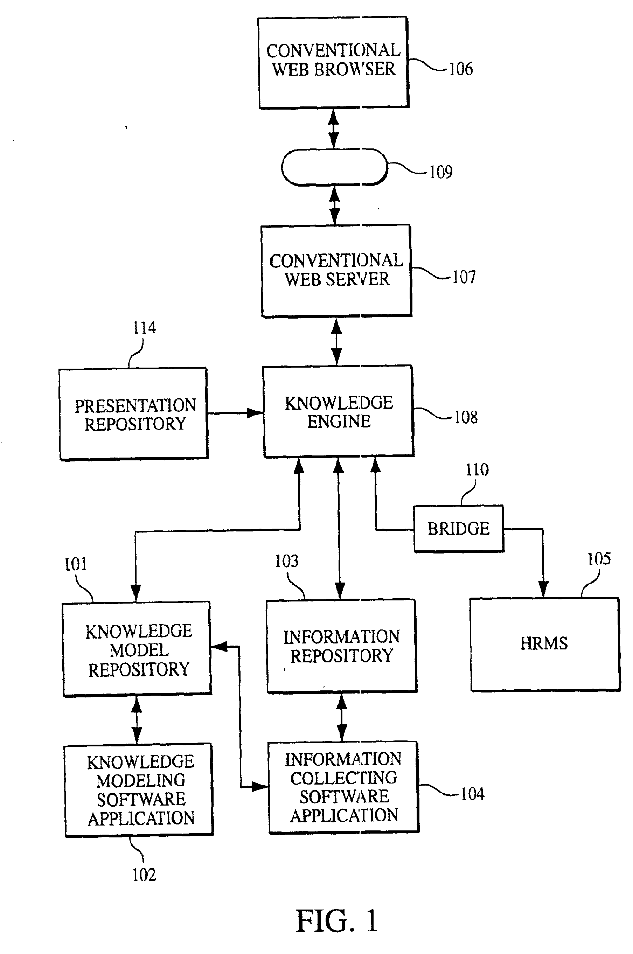

In a preferred embodiment, illustrated in Fig. 1, information is sent to the entity making the query using a combination of a conventional browser 106 and a conventional web server 107. In such an example, the server 107 and browser 106 communicate via a TCP/IP network 109. Such a system has certain advantages in that established platforms and tools are readily available. In other implementations, however, proprietary interfaces could be used over public and/or private networks. Moreover, in still other implementations, the knowledge system may provide information to another application program, such as other human resource or enterprise management systems, that has its own proprietary interfaces and displays. In such situations, the knowledge engine interfaces with the other application program via, in one case, standard application programming interfaces (APIs).

In the present embodiment, the querying entity may be an employee seeking to answer personal questions concerning, *e.g.,* his benefits or a manager seeking to answer such questions concerning the employees in her department. Alternatively, this system may also be deployed to enable HR professionals to generate queries and obtain answers in response to questions from employees seeking the information, *e.g.,* in a call-center environment. In still other applications, the system may be invoked during a plan selection process by an employee to provide information to assist the employee with the plan selection decision.

A knowledge engine or compiler 108 dynamically generates the HTML (Hyper-Text Markup Language) pages that are provided by the web server 107. These web pages are generated by referencing the relevant section of the knowledge model repository 101 and inserting information from the organization-specific and group-specific information repository 103 and HRMS 105 that functions as the employee-specific information repository.

In one embodiment, the compiled information from the knowledge model repository 101, organization-specific information repository 103, and the HRMS 105 is then incorporated into HTML template pages contained in a presentation repository 114. The resulting complete pages are provided by the web server 107 to browser 106. In other embodiments, the responses are interfaced with other applications and/or processes rather than directly with users. *E.g.,* information can be transferred to a case-management or claims-processing system.

The knowledge model repository 101 contains the various knowledge models created using knowledge modeling software application 102. In one embodiment, these models are implemented either in an object-oriented or relational database system. Knowledge model repository 101 typically contains separate knowledge models for multiple plans, such as benefit plans for both hourly-workers and for salaried workers. The model for each of these plans, however, may be hierarchically-organized.

The knowledge modeling software application 102 is a tool that is used to generate the knowledge models contained in knowledge model repository 101. This system tracks variable assignments and their location in the organizational and HRMS repositories. It also provides template rule organization tools for building the sequenced data entry screens that are used during system implementation for creating variable assignments.

The organizational information collection software application 104 is a tool used by an HR system manager to accumulate information specific to the organization in the organization-specific information repository 103. In one embodiment, this organizational information collection software application 104 successively prompts the system manager to enter the information required by the system. The serial questions posed by the prompts are generated by accessing the associated variable prompts that are stored in the knowledge model repository 101. This process creates the various instantiations of the knowledge models, such as models of the specific medical plans covered by the system.

In the example presentation of Fig. 2, information is provided to a user who is selecting or changing a health insurance plan. Specifically, the presentation provides answers concerning a user-defined selection of benefits offered next year by both the HMO Blue and Scrimshaw Catastrophic Medical plans, as compared to the user's current benefits under HMO Blue. The user may tailor the presentation in order to compare only those benefits that are of concern to the user.

Comparison table 200 shows information concerning different medical plans that has been generated by knowledge base engine 108 and supplied by server 107 to the user via web browser 106. A first, horizontal, axis 210 has headings 212A-212C corresponding to various aspects of the user's context, *e.g*., group instantiations, plan instantiations, or effective date instantiations. Specifically, the context relates both to plan instantiations (*viz.,* the HMO Blue plan and the Scrimshaw Catastrophic Medical plan) and effective date instantiations (*viz.,* this year and next year). In the preferred embodiment, the user may define the context by selecting the relevant knowledge model instantiation(s), preferably by selection from a menu of possible instantiations via pull down menus (accessed by activation points 218) in the headings. These pull down menus list several, or preferably most, or most preferably all of the different instantiations of the knowledge model.

The second, vertical, axis 214 has headings for selected knowledge blocks 216A-216G covered by the knowledge model instantiation(s) selected. Preferably, these knowledge blocks are individually selected from a menu of possible knowledge blocks via pull down menus 220. For each cell, the compiler interprets the knowledge block specified by the row using the context including the knowledge model instantiation specified by column. *E.g*., cells 222A and 222B of table 200 display specific information concerning the relevant knowledge block for each instantiation selected. Cell 222A relates to submitting claims under the current HMO Blue medical plan and cell 222B relates to submitting claims under next year's HMO Blue medical plan.

As illustrated by the exemplary presentation of Fig. 2, each comparison table is generated based on user-selected plans and plan features. The table presentation may be revised dynamically by the user in response to changes made to the plan and plan feature selections.

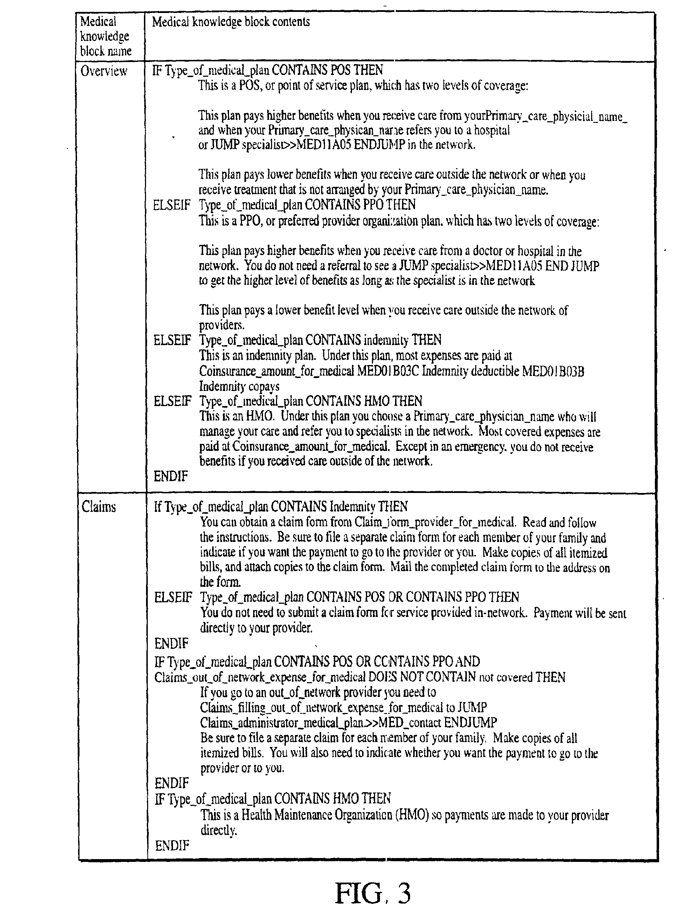

Fig. 3 shows exemplary knowledge blocks of which the knowledge model is composed. In the present implementation of the knowledge model, rules and text inferencing mechanisms are used to construct the cells in the plan comparison table by the knowledge engine. The example illustrates the Medical Plan Feature Overview knowledge block, which has a block ID of OVERVIEW, and the claim submission knowledge block. In this specific example, text is generated by the interpretive logic, through "if-then-else" statements, and also through strict substitution, where variables are located and replaced with variable assignments drawn from information repository 103. It is important to note the separation between the presentation format and the organization of the knowledge blocks in the knowledge model. Because the model organization is divorced from the display format, the system is able to best serve both the needs of the domain expert who designs the system and the user that relies on it to obtain specific information.

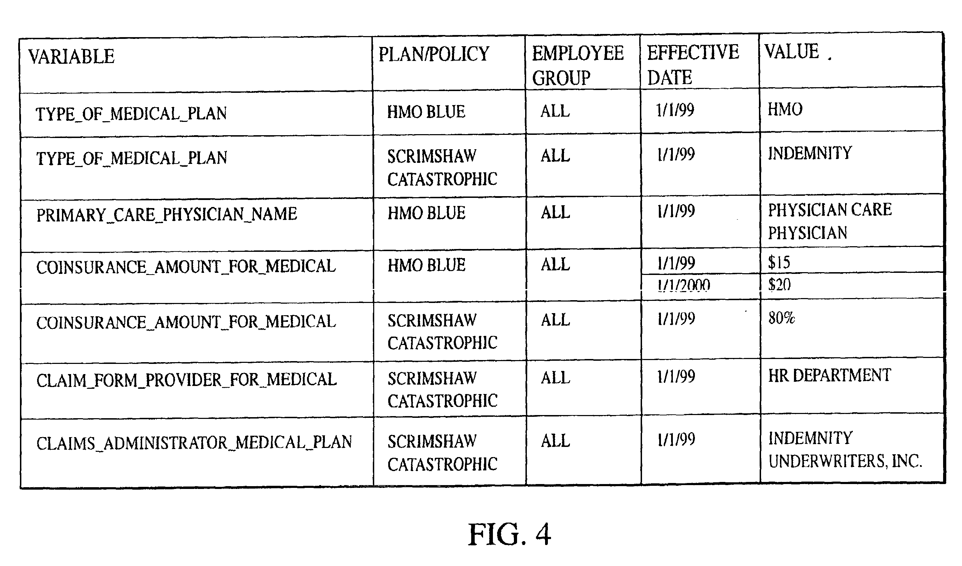

Fig. 4 shows an exemplary information repository 103. Specifically, variable assignments are made according to a querying employee's employee-specific information, employer information, plan, employee group, and effective date. Thus, there are different instantiations of the policy depending on the employee's employee-specific information, employer information, plan, employee group, and effective date. Thus, plan- and date-specific information is inserted into the knowledge blocks, and therefore the table presentation, to provide comparative analysis displays in a user- friendly fashion without artifacts from the knowledge-model's organization. Variable assignments may also be drawn from information contained in the company's HRMS.

In addition to presenting the information in a fashion that is useful to a given system user, all various possible presentations are updated automatically when changes are made to the underlying knowledge model and information repository. Fig. 4 illustrates the effect that changes to the effective date have on the same instantiation (i.e., HMO Blue) and also the effect of changes in the instantiation (i.e., HMO Blue and Scrimshaw). Specifically, the current HMO Blue plan requires a $15 coinsurance payment per visit, in contrast to a $20 coinsurance payment per visit next year and a 20% unlimited dollar amount under the Scrimshaw plan.

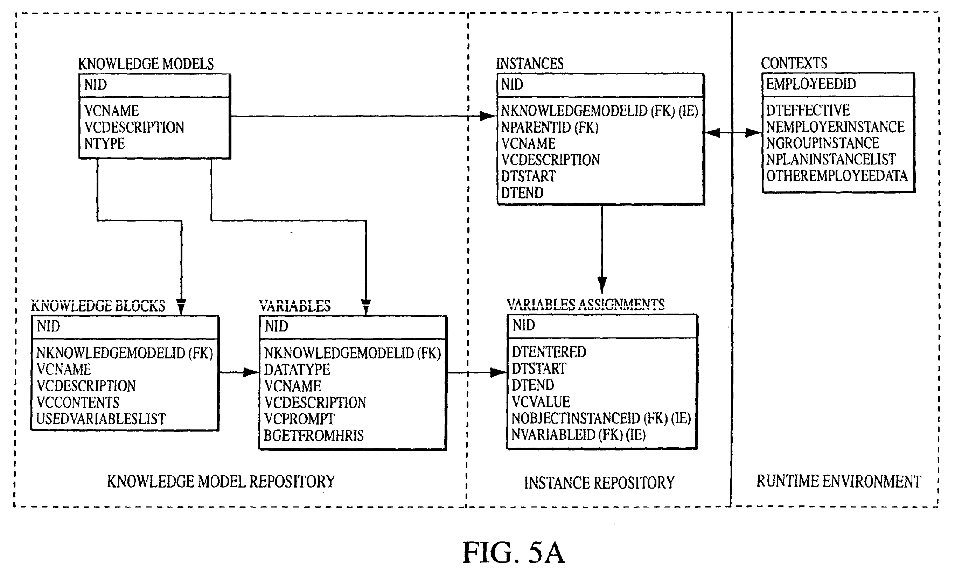

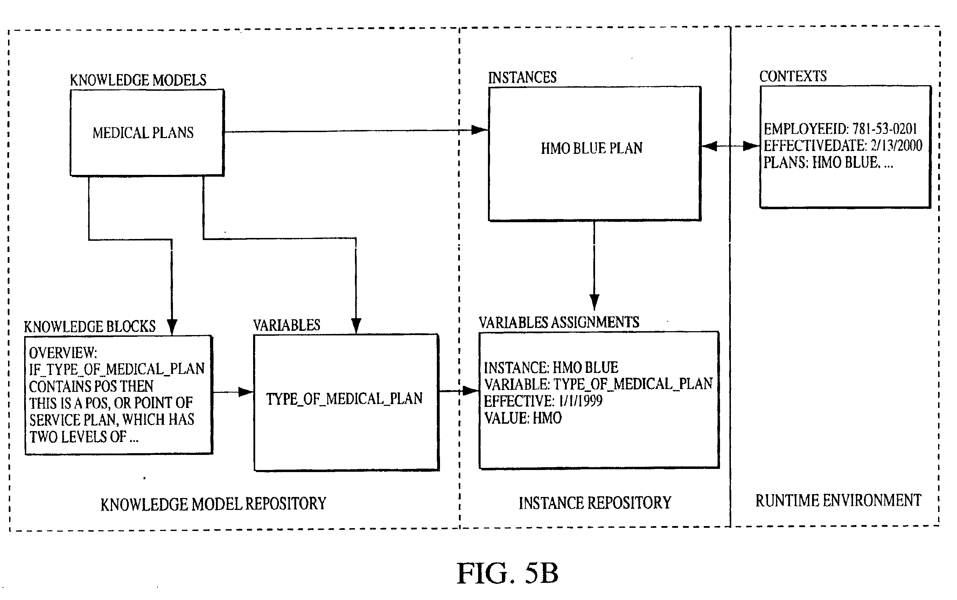

Fig. 5A illustrates an exemplary portion of the interactivities of the constituent elements of the knowledge model repository, instance repository, and the runtime environment of a user. Fig. 5B illustrates the same exemplary portion of the interactivities of the constituent elements of the knowledge model repository, instance repository, and the runtime environment of a user, as shown in Fig. 5A, as it might occur in the employee benefit context.

It is important to note the possible differences between the comparison table structure and the knowledge block organisation structure in the knowledge model. E.g., the table shown in Fig. 2 could present different information related to the same medical benefit plans in response to user-initiated changes in plan and plan feature selections. Despite the different presentation options available to a system user, the plan comparison table references the same knowledge blocks in the knowledge model. In this way, the presentation may be organized for the user's ease of access, while the knowledge model may be organized for content authoring by a domain expert.

## Claims

1. A knowledge-based comparative information dissemination system, characterised in comprising:
at least one knowledge model constructed using at least one knowledge block;
at least two instantiations of said at least one knowledge model;
compiler means capable of accessing the at least one knowledge model and the at least two instantiations of said at least one knowledge model to acquire information necessary to answer a query from a system user with a defined context, said query being related to said at least two instantiations and said compiler means being further capable of combining the information so that it may be displayed to said system user; and
display means capable of presenting the combined information to said system user in a format designed to facilitate comparative analysis by said system user.

2. A knowledge-based system according to Claim 1, further **characterised in that** the at least one knowledge model is organized as determined by a content author.

3. A knowledge-based system according to Claim 1 or Claim 2, further **characterised in that** the at least one knowledge model is a human resource knowledge model.

4. A knowledge-based system according to Claim 1, further **characterised in that** the at least one knowledge model resides within a knowledge model repository.

5. A knowledge-based system according to Claim 4, further **characterised in that** the knowledge model repository comprises at least one human resource knowledge model.

6. A knowledge-based system according to Claim 5, further **characterised in that** the at least two instantiations relate to different benefit plans in the at least one human resource knowledge model.

7. A knowledge-based system according to Claim 1, further **characterised in that** the at least two instantiations of said at least one knowledge model reside within an information repository.

8. A knowledge-based system according to Claim 1, further **characterised in that** the compiler means is capable of accessing the knowledge model repository.

9. A knowledge-based system according to Claim 7, further **characterised in that** the compiler means is capable of accessing the information repository.

10. A knowledge-based system according to any preceding Claim, further **characterised in that** the combined information is displayed within at least one presentation template.

11. A knowledge-based system according to any preceding Claim, further **characterised in that** the at least one knowledge block references at least one variable, the value of said at least one variable being determined by the compiler means based on variable assignments within an information repository and the user's deed context.

12. A knowledge-based comparative information dissemination system designed to provide, to a user having a defined context, specific information based on the user's defined context, the system being characterised in comprising:
at least one knowledge model constructed using at least one knowledge block that contains at least one reference to at least one variable;
at least one value assigned to the at least one variable;
at least one variable assignment attribute sufficient to determine the appropriate value for said at least one variable;
at least one presentation template organized in a format designed to best convey information to systems users operating in different contexts, in which different presentations are capable of incorporating the same knowledge blocks; and
compiler means that delivers presentations to a system user by combining a presentation template with content supplied by the knowledge model and variable attributes from the information repository.

13. A knowledge-based system according to Claims 11 or 12, further **characterised in that** the appropriate value for the said at least one variable is a nullity.

14. A knowledge-based system according to Claim 12, further **characterised in that** the at least one knowledge model is a human resource knowledge model.

15. A knowledge-based system according to any of Claims 11 to 14, further **characterised in that** the user's defined context consists of elements selected from the group consisting of user-defined employee instantiations, employee group instantiations, employer instantiations, plan instantiations, and effective date.

16. A knowledge-based system according to Claim 15, further **characterised in that** the user's defined context in which said at least one variable is referenced determines the instantiation relevant to said at least one variable, said relevant instantiation being used to determine the correct variable assignment for said at least one variable and said correct variable assignment being used to determine the appropriate value for said at least one variable.

17. A knowledge-based system according to Claim 12, further **characterised in that** the at least one knowledge block is organized by a content author.

18. A knowledge-based system according to Claim 12, further **characterised in that** the at least two values assigned to the at least one variable reside within an information repository.

19. A knowledge-based system according to Claim 12, further **characterised in that** the at least one presentation template reside within a presentation template repository.

20. A knowledge-based system according to any preceding Claim, further **characterised in that** the at least one knowledge block is hierarchically organized within the at least one knowledge model.

21. A knowledge-based system according to Claims 1 or 12, further **characterised in that** the at least one knowledge bock is organized by major categories and minor categories within the at least one knowledge model.

22. A knowledge-based system according to any preceding Claim, further **characterised in that** the at least one knowledge block further comprises rules and text.

23. A knowledge-based system according to Claim 22, further **characterised in that** the compiler interprets, in view of the user's defined context, the rules, text, and variable references contained in said at least one knowledge block.

24. A knowledge-based system according to Claim 23, further **characterised in that** the user's defined context is determined by factors selected from the group consisting of user-defined employee instantiations, employee group instantiations, employer instantiations, plan instantiations, and effective date.

25. A knowledge-based system according to Claim 12, further **characterised in that** the value of said at least one variable is determined by the compiler based on variable assignments within an information repository and the user's defined context.

26. A knowledge-based system according to Claim 25, further **characterised in that** the user's defined context determines the instantiation relevant to said at least one variable, which in turn defines a value for said at least one variable.

27. A knowledge-based system according to Claims 16 or 26, further **characterised in that** the variable assignments are created using attributes selected from the group consisting of employee instantiations, employee group instantiations, employer instantiations, plan instantiations, and effective date.

28. A knowledge-based system according to any preceding Claim, further **characterised in that** the display process presents the acquired information in a table.

29. A knowledge-based system according to Claim 28, further **characterised in that** the table comprises a plurality of cells formed by a first axis providing a plurality of headings, each for selecting one of the at least two instantiations of the at least one knowledge model and a second axis providing at least one heading for selecting the at least one knowledge block comprised by the at least two instantiations of the knowledge model.

30. A knowledge-based system according to Claim 29, further **characterised in that** the second axis comprises a plurality of headings.

31. A knowledge-based system according to Claim 30, further **characterised in that** a user may select for each heading on the second axis from among a plurality of knowledge blocks comprised by the at least two instantiations of the knowledge model.

32. A knowledge-based system according to any of Claims 29, 30 or 31, further **characterised in that** each cell presents information related to each knowledge block relative to the selected instantiation of the knowledge model.

33. A knowledge-based system according to any of Claims 29 to 32, further **characterised in that** the headings of the first axis comprise pull-down menus facilitating the selection of one of the different instantiations.

34. A knowledge-based system according to Claim 31, further **characterised in that** the headings of the second axis comprise pull-down menus facilitating the selection among at least two of the different knowledge blocks comprised by the different instantiations of the knowledge models.

35. A knowledge-based system according to Claim 33, further **characterised in that** cells under a heading of the first axis are updated with knowledge block information in response to selection of a different knowledge model instantiation.

36. A knowledge-based system according to Claim 34, further **characterised in that** cells under heading of the second axis are updated with information from the selected knowledge model instantiations in response to selection of a different knowledge block comprised by the different instantiations of the knowledge models.

37. A knowledge-based system according to Claim 28, further **characterised in that** the table comprises a first axis providing a plurality of headings, each for selecting among the different instantiations of the knowledge model and different versions of each instantiation.

38. A knowledge-based system according to Claim 37, further **characterised in that** the different versions of each instantiation correspond to different time frames for the validity of the information contained in the knowledge blocks.

39. A knowledge-based system according to Claims 10 or 12, further **characterised in that** the at least one presentation template is formatted in a markup language derived from SGML.

40. A knowledge-based system according to Claim 39, further **characterised in that** the markup language is selected from the group consisting of HTML and XML.

41. A knowledge-based system according to any preceding Claim, further comprising an information server that receives user queries via a user-operated browser and that transfers to the browser the presentations generated by the compiler.

42. A knowledge-based system according to any of Claims 1 to 40, characterised in further comprising an information server that is accessed by another application program and that transfers to users the presentations generated by the compiler in a manner selected from the group consisting of direct and indirect transmission.

43. A method of providing information, the method comprising the steps of:
accessing a presentation template that references at least one knowledge block;
incorporating information into the presentation template by means of a compiler based on the contents of the at least one knowledge block referenced by the presentation template; and
displaying a presentation to a user comprising the presentation template and the incorporated information in a format designed to facilitate comparative analysis.

44. A method according to Claim 43, wherein the format is a comparison table.

45. A method according to Claims 43 or 44, wherein the presentation template is accessed in response to a user query.

46. A method according to any of Claims 43, 44 or 45, wherein the information is derived based on the interpretation by the compiler of the at least one knowledge block.

47. A method according to Claim 46, wherein the compiler interprets in view of the context in which a user is operating rules, text, and at least one variable contained in said at least one knowledge block.

48. A method according to Claim 47, wherein the presentation contains human resource-related information and the value associated with the at least one variable is determined by the compiler after the user context is determined.

49. A method according to Claim 48, wherein the context in which a user is operating is determined by factors selected from the group consisting of user-defined employee instantiations, employee group instantiations, employer instantiations, plan instantiations, and effective date.

50. A method according to any of Claims 43 to 49, further comprising hierarchically organizing the content in the at least one knowledge block within the knowledge model.

51. A method of answering a query about an information system user, the method comprising the steps of:
a) accessing an information system that comprises:
at least one knowledge model constructed using at least one knowledge block;
at least two instantiations of said at least one knowledge model;
compiler means capable of accessing the at least one knowledge model and the at least two instantiations of said at least one knowledge model to acquire information necessary to answer a query from a system user with a defined context, said query being related to said at least two instantiations and said compiler means being further capable of combining the information with a presentation page so that it may be displayed to said system user; and
display means capable of presenting the combined information to said system user in a format designed to facilitate comparative analysis by said system user;
b) identifying said system user,
c) identifying the presentation page appropriate to answer the query;
d) determining the relevant at least two instantiations of said at least one knowledge model;
e) selecting the relevant at least two instantiations in a presentation template;
f) inserting relevant employee information into the at least one knowledge block by reference to an information repository to derive information enabling the query to be answered; and
g) displaying the derived information in a comparative table.

52. A method according to Claim 51, wherein the relevant employee information comprises information from a HRMS.

53. A method according to Claims 51 or 52, wherein the relevant employee information comprises employee-specific information, employee group-specific information, employer-specific information, benefit plan-specific information, and effective date information.

54. A method according to any of Claims 51, 52 or 53, wherein the presentation page is identified by navigation.

55. A method according to any of Claims 51, 52 or 53, wherein the presentation page is identified by a search engine.
